# EUROPEAN PATENT APPLICATION

(11) **EP 4 027 649 A1**
(43) Date of publication of application: **13.07.2022**
(21) Application number: 20865134.9
(22) Date of filing: 04.09.2020
(51) Int. Cl.: H04N 21/422, H04N 21/482

(54) **VIDEO PLAYING METHOD AND APPARATUS, TERMINAL AND COMPUTER-READABLE STORAGE MEDIUM**

(30) Priority: 17.09.2019 CN 201910877743
(71) Applicant: ZTE Corporation, Shenzhen, Guangdong 518057 (CN)
(72) Inventor: XU, Jianfeng, Shenzhen, Guangdong 518057 (CN)
(74) Representative: Zoli, Filippo
(86) International application number: PCT/CN2020/113596
(87) International publication number: WO 2021/052197

(57) **Abstract**

Provided are a video playing method and apparatus, a terminal and a computer-readable storage medium. When currently in a detail page of a film, a playing address of the film is acquired; streaming media data of the film within a preset time period is then acquired according to the playing address, and an operation of preloading the streaming media data is carried out; and furthermore, when a playing instruction is received, the film is played according to the streaming media data.

## Description

### CROSS-REFERENCE TO RELATED APPLICATION

This application is filed on the basis of the Chinese patent application No. 201910877743.X filed September 17, 2019, and claims priority of the Chinese patent application, the entire contents of which are incorporated herein by reference.

### TECHNICAL FIELD

The present disclosure relates to the technical field of video playing, in particular to a video playing method, an apparatus, a terminal device and a computer-readable storage medium.

### BACKGROUND

With the development of network technology, video traffic will account for more than 95% of the network data consumption. Video players as the terminal presentation carrier of video, are continuously developing and innovating in recent years, from SD, HD, UHD to Blu-ray playback, and from 2D to 3D display. Improvements in the user experience and enhancements in the fluency of playback operation for the video players, become important factors to attract users.

At present, the video playback would not start until the user issues the video playback instruction (for example, click the play button), and the loading process often takes some time, so the user has to wait. It can be seen that in some cases, it's ineffective to have prompt video playback which greatly reduces the user's experience satisfaction.

### SUMMARY

A video playing method, an apparatus, a terminal device and a computer-readable storage medium are provided in the embodiments of the present disclosure.

An embodiment of the present disclosure provides a video playing method, which includes, acquiring a playback address of a movie in response to a current presenting of a detail page of the movie; acquiring streaming media data of a predetermined time period in the movie according to the playback address, and preloading the streaming media data; and playing the movie according to the streaming media data in response to a playback instruction being received.

An embodiment of the present disclosure provides an apparatus, which includes, an acquisition module, a preloading module and a playback module, in which, the acquisition module is configured to acquire a playback address of a movie in response to a current presenting of a detail page of the movie; the preloading module is configured to acquire streaming media data of a predetermined time period in the movie according to the playback address, and to preload the streaming media data; and the playback module is configured to play the movie according to the streaming media data in response to a playback instruction being received.

An embodiment of the present disclosure further provides a terminal device, which includes a processor, a memory and a communication bus, in which, the communication bus is configured to implement a connection and communication between the processor and the memory; and the processor is configured to execute at least one computer program stored in the memory, which when executed by the processor, causes the processor to carry out the video playing method as described above.

An embodiment of the present disclosure further provides a computer-readable storage medium storing thereon at least one program executable by at least one processor, which when executed by the processor, causes the processor to carry out the video playing method as described above.

### BRIEF DESCRIPTION OF DRAWINGS

Some embodiments of the present disclosure will be further illustrated below with reference to the accompanying drawings and examples, in which:
FIG. 1 depicts a schematic diagram of a general flow of a video playing method according to Embodiment one of the present disclosure;
FIG. 2 depicts a schematic diagram of a general flow before acquiring the playback address of the movie when the detail page of the movie is being presented according to Embodiment one of the present disclosure;
FIG. 3 depicts a schematic diagram of a general flow of acquiring streaming media data of a predetermined time period in the movie according to the playback address according to Embodiment one of the present disclosure;
FIG. 4 depicts a schematic diagram of a general flow of preloading streaming media data according to Embodiment one of the present disclosure;
FIG. 5 depicts a general flow diagram of a particular video playing method according to Embodiment two of the present disclosure;
FIG. 6 depicts a schematic diagram of an apparatus according to Embodiment three of the present disclosure; and
FIG. 7 depicts a schematic diagram of a terminal device according to Embodiment four of the present disclosure.

### DETAILED DESCRIPTION

In order to provide a better understanding of the purpose, technical scheme and advantages of the present disclosure, the present disclosure will be further described with details below through some embodiments in conjunction with the drawings. It should be understood that the embodiments described here are illustrative but not limiting.

### EMBODIMENT ONE

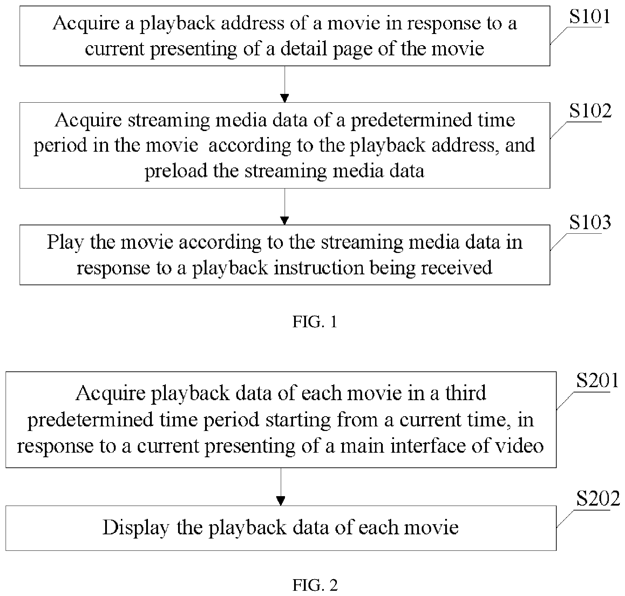

In order to solve the problems of slow loading and long waiting for the movie and poor user experience in the existing technology, a video playing method is provided in an embodiment of the present disclosure, which includes acquiring a playback address of a movie in response to a current presenting of a detail page of the movie; acquiring streaming media data of a predetermined time period in the movie according to the playback address, and preloading the streaming media data; and playing the movie according to the streaming media data in response to a playback instruction being received. Please refer to FIG. 1, which depicts a schematic diagram of the general flow of the video playing method according to this embodiment.

In S101, a playback address of the movie is acquired as a detail page of the movie currently is being presented.

In an embodiment, the video playing method according to this embodiment is performed by an interactive Internet TV, IPTV or Internet TV, OTT TV. In other words, in this embodiment, movies on demand can be provided via an interactive Internet TV, IPTV, or an Internet TV, OTT TV.

It can be understood that functions like receiving video-on-demand programs, video broadcasting and surfing the Internet, are performed by an IPTV through a computer or a set-top box together with a TV. Efficient video compression methods are employed, so that viewing quality close to that of DVD (usually the video streaming bandwidth for DVD quality needs 3Mb/s) is achieved at the video streaming bandwidth of 800Kb/s, which is advantageous for video services such as live video on the Internet, long-distance real video on demand, and program production, etc. OTT TV is the abbreviation of "Over The Top TV", which refers to full-featured Internet TV based on open Internet video service and integrating interactive TV functions.

In an embodiment, in this embodiment, acquisition of the playback address of the movie as a detail page of the movie currently is being presented, can be performed in the at least two following methods.

Method 1, a timer is started in response to a detection that the detail page is being presented, and the playback address of the movie is to be acquired as a predetermined time is reached.

In one example, a clock may be started in response to a detection that the detail page is being presented, and the playback address of the movie is to be acquired as a predetermined time is reached. Alternatively, a timer may be started in response to a detection that the detail page is being presented, and the playback address of the movie is to be acquired as a predetermined time set by the timer is reached. In this way, the situation in which the streaming media of the movie is already preloaded after the playback address of the movie is acquired, but the user just takes a look at the detail page of the movie and does not want to watch the movie, can be avoided.

Method 2, the playback address of the movie is acquired in response to a detection that the detail page is being presented.

In one example, the playback address of the movie can be acquired as soon as the detail page of the movie is presented. In this way, there is no need to start the clock or timer to reduce power consumption.

It can be understood that the detail page of the movie is the page for showing the relevant information of the movie, including the name, actors, director, year, relevant recommendations and other information, and providing interactive operations such as collection, filming, ordering, playing, bookmarks, broadcasting list, or the like, that a user must go through before watching the movie.

In an embodiment, as the detail page of the movie currently is being presented, before acquiring the playback address of the movie, the method further includes at least the following operation, as shown in FIG. 2.

In S201, as a main interface of video is being presented, playing data of each movie within a third predetermined time period starting from the current time is acquired.

It should be understood that when a user is ready to watch a video, it is very likely that he/she will watch a movie that has not been watched in the recent period. Therefore, when he/she is currently viewing the main interface of the video, the playing data of each movie within a third predetermined time period starting from the current time is acquired, such that the user is allowed to directly select the movie to be watched from the playing data of each movie and enter the details page of the movie, thus avoiding the cumbersome operation of inputting the name of the movie again for searching, or looking for the movie among many movies in the main interface of the video. To a certain extent, the experience satisfaction of the user is improved.

An example is shown here with details for a better understanding.

For example, if the main interface of the video is currently being presented, and the current time is 19:00, and the third predetermined time period is 7 hours, the playing data of each movie from 12: 00 to 19: 00 will be acquired, and the acquired playing data of each movie is supposed to be A, B and C respectively. The playing data of movies A, B and C is displayed separately, and the user can click on any one playing data of movies A, B and C, such that the detail page of the corresponding movie is shown.

It shall be noted that the third predetermined time period may be customized by a developer or a user. Generally, the value of the third predetermined time period may be several hours, several days, or dozens of days. In practical application, the value of the third predetermined time period may be flexibly adjusted according to specific application scenarios.

In S202, the playing data of each movie is shown.

In S 102, the streaming media data of a predetermined time period in the movie is acquired according to the playback address, and the streaming media data is preloaded.

In an embodiment, after the playback address of the movie is acquired, and before the streaming media data of the movie is acquired according to the playback address, the method further includes, preprocessing the playback address, and the preprocessing includes string concatenation, or the like.

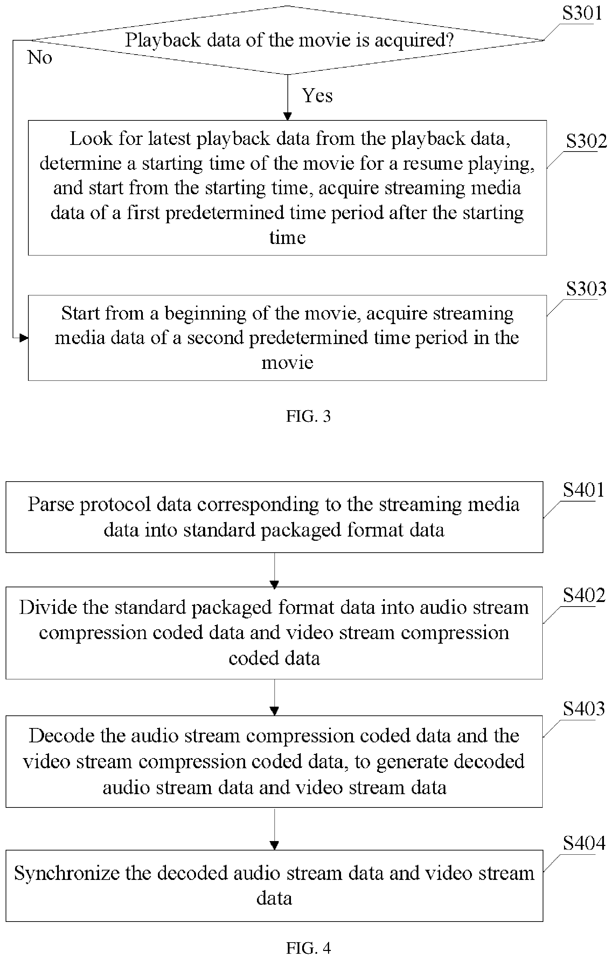

In an embodiment, acquiring the streaming media data of a predetermined time period in the movie according to the playback address includes at least the following operations, as shown in FIG. 3.

In S301, a determination is performed as to whether the playback data of the movie is acquired.

If yes, S302 is performed, or if not, S303 is performed.

It should be understood that when the detail page of the movie is being presented, a determination as to whether the movie has been played or not, can be performed by determining whether the playing data of the movie can be acquired. If the playing data of the movie cannot be acquired, then the movie has not been played and is currently in the state of first time playing. And if the playing data of the movie can be acquired, then the movie has been played before and is currently in the state of resume playing. For TV series, there are usually dozens of episodes, and the "first playing" and "resume playing" as mentioned above are referred to the playing of each episode.

In S302, the latest playing data is looked for, from the playing data, the starting time of the movie for resume playing is determined, and starting from the starting time, the streaming media data of the first predetermined time period after the starting time is acquired.

An example is shown here with details for a better understanding.

For example, it is apparent from the acquired playing data of the movie as shown in Table 1 that, the latest playing data from Table 1 is at 10th minute of Episode 11, played at 20: 00 on 2019: 08: 09, then the starting time of the movie for resume playing is determined to be at 11th minute of the Episode 11, and the streaming media data starting from the 11th minute of the Episode 11 is to be acquired. In case that the first predetermined time period is 2 minutes, then the streaming media data from the 11th minute to the 13th minute of the Episode 11 is to be acquired.

**Table 1**

| Playback time | Recently played |
|---|---|
| 2019:08:06 19:00 | Episode 5, 39 minutes |
| 2019:08:07 19:30 | Episode 7, 40 minutes (finished) |
| 2019:08:08 19:00 | Episode 9, 40 minutes (finished) |
| 2019:08:09 20:00 | Episode 11, 10 minutes |

It shall be noted that, resume playing is illustrated by way of an example merely here. However, in practical application, flexible adjustments shall be made according to specific application scenarios. Also, it shall be noted that the first predetermined time period may be customized by a developer or a user, and the value of the first predetermined time period is greater than 0 minutes but less than the remaining time period of the movie for resume playing. For example, the value of the first time period is greater than 0 minutes but less than 30 minutes. Generally, the value of the first predetermined time period is not too large, as long as that the movie can be played immediately after the user sends the play instruction.

In S303, the streaming media data of the second predetermined time period from the beginning of the movie is acquired.

A further example is shown here with details for a better understanding.

For example, it is apparent from the acquired playing data of the movie as shown in Table 2 that, the latest playing data from Table 2 is at the 40th minute of the Episode 11 played at 20: 00 on 2019: 08: 09 (finished). Then it is determined that currently the Episode 12 shall be played for the first time, in case that the second predetermined time period is 3 minutes, and then the streaming media data from 0 to 3rd minute of the Episode 12 is to be acquired.

**Table 2**

| Playback time | Recently played |
|---|---|
| 2019:08:06 19:00 | Episode 5, 39 minutes |
| 2019:08:07 19:30 | Episode 7, 40 minutes (finished) |
| 2019:08:08 19:00 | Episode 9, 40 minutes (finished) |
| 2019:08:09 20:00 | Episode 11, 40 minutes (finished) |

It shall be noted that, first playing is illustrated by way of an example merely here. However, in practical application, flexible adjustments shall be made according to specific application scenarios. Also, it shall be noted that the second predetermined time period may be customized by a developer or a user, and the value of the second predetermined time period is greater than 0 minutes but less than the entire duration of the movie. For example, the value of the second time period is greater than 0 minutes but less than 30 minutes. Generally, the value of the second predetermined time period is not too large, as long as that the movie can be played immediately after the user sends the play instruction. The value of the second predetermined time period may be or may not be the same as that of the first predetermined time period.

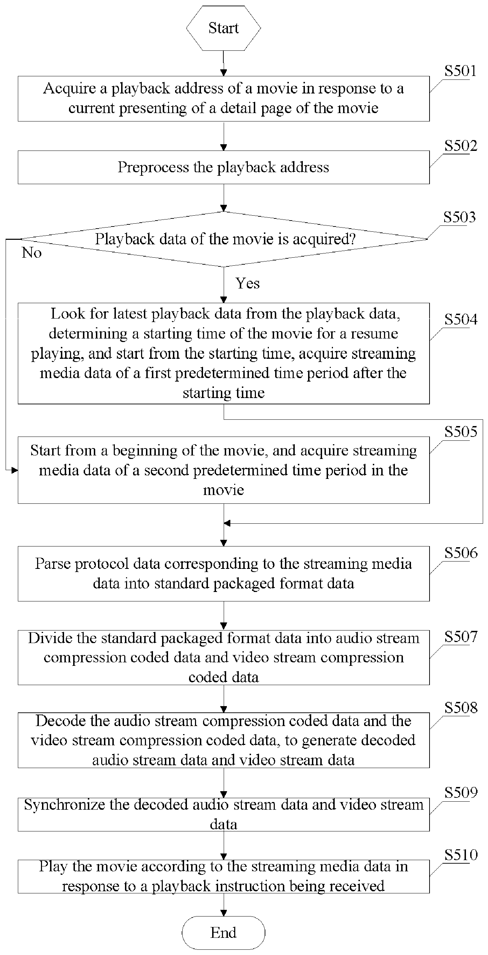

In an embodiment, the preloading operation for streaming media data in this embodiment includes at least the following operations, as shown in FIG. 4.

In S401, the protocol data corresponding to streaming media data is parsed into standard packaged format data.

It should be understood that this operation is to parse the protocol.

In S402, the packaged format data is divided into audio stream compression coded data and video stream compression coded data.

It should be understood that this operation is to decapsulate.

In S403, the audio stream compressed coded data and the video stream compressed coded data is decoded.

It should be understood that this operation is a decoding operation.

In S404, the decoded audio stream data and video stream data are synchronized.

It should be understood that this operation is to synchronize the audio and the video.

It shall be noted that what is described here is only the routine operations of preloading the streaming media data. On this basis, more or fewer operations may be performed accordingly for preloading the streaming media data, as long as the performance of the preloading operations enables the immediate playing of the movie as the user sends the playing instruction.

In S103, the movie is played according to the streaming media data as the play instruction is received.

In an embodiment, the preloading operation of streaming media data in this embodiment may be corresponding to one thread, which is called the decoding thread. And the detection of the playing instruction in this embodiment may be corresponding to another thread, which is called the rendering thread. In this way, a dual-thread mode is enabled, which ensures that the audio and video can be transmitted as soon as possible for playing.

With the video playing method according to the embodiment of the present disclosure, the playback address of the movie is acquired as the detail page of the movie is being presented. Then, the streaming media data of a predetermined time period in the movie is acquired according to the playback address, and the streaming media data is preloaded. And then, the movie is played according to the streaming media data as the playing instruction is received. Thereby, the problems of the inefficiency of prompt playing of the video and poor user experience in the existing technology are solved. That is, with the video playing method according to the embodiments of the present disclosure, the streaming media data of corresponding the predetermined time period in a movie is preloaded as the detail page of the movie is being presented, such that, prompt playing of the movie is possible as soon as the user sends the playing instruction. Thus, slow loading and long waiting for the movie resulting from the preloading of the movie after sending of the playing instruction by the user, is avoided, and the user's experience satisfaction is greatly improved.

### EMBODIMENT TWO

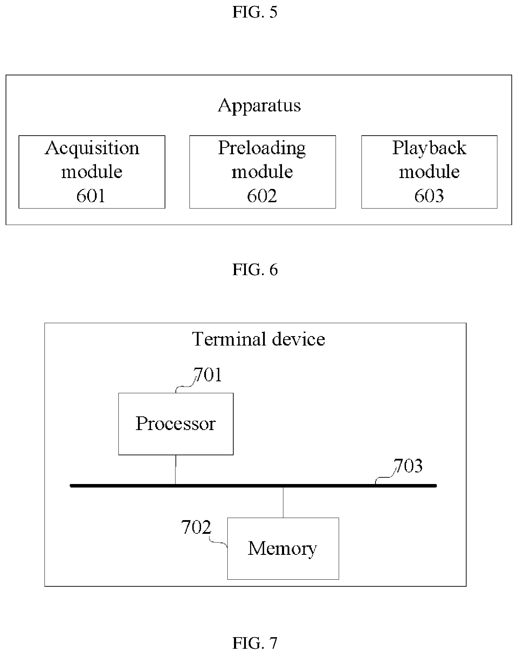

In this embodiment of the present disclosure, as shown in FIG. 5, there is provided a specific video playing process on the basis of embodiment one.

In S501, a playback address of the movie is acquired as a detail page of the movie currently is being presented.

In an embodiment, a timer is started as it is detected that, the detail page of the movie is being presented, and the playback address of the movie is to be acquired as a predetermined time is reached. Alternatively, the playback address of the movie is to be acquired once it is detected that, the detail page of the movie is being presented.

In one embodiment:
Play address acquisition interface: StringgetPlayUrl(Stringcontentcode);
Interface description: Get the playback address, URL of the movie;
Parameter description: contentcode is the content code of the movie;
Description of return value: playback address, URL of the movie.

In S502, a pre-process is performed to the playback address.

In S503, a determination is performed as to whether the playback data of the movie is acquired.

If yes, S504 is performed, or if not, S505 is performed.

In S504, the latest playing data is looked for, from the playing data, the starting time of the movie for resume playing is determined, and starting from the starting time, the streaming media data of the first predetermined time period after the starting time is acquired.

In S505, the streaming media data of the second predetermined time period from the beginning of the movie is acquired.

In S506, the protocol data corresponding to streaming media data is parsed into standard packaged format data.

In one embodiment:
Video preload interface: voidsetPrePlayUrl(String playurl);
Interface description: Notifying the player to perform the video preloading operation;
Parameter description: playurl is the playback address, URL of the movie;
Return value description: None.

In S507, the packaged format data is divided into audio stream compression coded data and video stream compression coded data.

In S508, the audio stream compressed coded data and the video stream compressed coded data is decoded.

In S509, the decoded audio stream data and video stream data are synchronized.

In S510, the movie is played according to the streaming media data as the play instruction is received.

In one embodiment:
Video playback interface: void play ();
Interface description: notifying the player to output video;
Parameter description: none;
Description of return value: none.

With the video playing method according to the embodiments of the present disclosure, the streaming media data of the corresponding predetermined time period (to be played) in a movie is preloaded as the details page of the movie is being presented, such that, prompt playing of the movie is possible as soon as the user sends the playing instruction. Thus, problems of slow loading and long waiting for the movie and poor user experience in the existing technology are solved, and the user's experience satisfaction is greatly improved.

### EMBODIMENT THREE

In order to solve the problems of slow loading and long waiting for the movie and poor user experience in the existing technology, an apparatus is provided in this embodiment of the present disclosure, as shown in FIG. 6, which depicts a schematic diagram of the apparatus according to this embodiment.

The apparatus according to this embodiment includes an acquisition module 601, a preloading module 602 and a playback module 603.

The acquisition module 601 is configured to acquire a playback address of a movie when a detail page of the movie is being presented.

The preloading module 602 is configured to acquire streaming media data in a predetermined time period of the movie according to the playback address, and to preload the streaming media data.

And the playback module 603 is configured to play the movie according to the streaming media data when a playback instruction is received.

It should be understood that each of the acquisition module 601, the preloading module 602 and the playback module 603 in this embodiment may be implemented as a processor or another hardware device, but it is not intended to limit to this.

In an embodiment, the apparatus in this embodiment may be an interactive Internet TV, IPTV or an Internet TV, OTT TV. However, it should be noted that the two types of TVs as described above are conventional apparatus, and it is not intended to limit to these two types of apparatus in the present disclosure, the apparatus may be also a smart phone, a smart wearable device, or the like, any device that can play videos is within the scope of the present disclosure.

It can be understood that functions like receiving video-on-demand programs, video broadcasting and surfing the Internet, are performed by an IPTV through a computer or a set-top box together with a TV. Efficient video compression methods are employed, so that viewing quality close to that of DVD (usually the video streaming bandwidth for DVD quality needs 3Mb/s) is achieved at the video streaming bandwidth of 800Kb/s, which is advantageous for video services such as live video on the Internet, long-distance real video on demand, and program production, etc. OTT TV is the abbreviation of "Over The Top TV", which refers to full-featured Internet TV based on open Internet video service and integrating interactive TV functions.

In an embodiment, the acquisition module 601 in this embodiment is configured to acquire the playback address of the movie when the detail page of the movie is being presented, through various manners including at least the following two methods.

Method 1: The acquisition module 601 is configured to start a timer in response to a detection that the detail page is being presented, and to acquire the playback address of the movie as a predetermined time is reached.

In one example, a clock may be started in response to a detection that the detail page is being presented, and the playback address of the movie is to be acquired as a predetermined time is reached. Alternatively, a timer may be started in response to a detection that the detail page is being presented, and the playback address of the movie is to be acquired as a predetermined time set by the timer is reached. In this way, the situation in which the streaming media of the movie is already preloaded after the playback address of the movie is acquired, but the user just takes a look at the detail page of the movie and does not want to watch the movie, can be avoided.

Mode 2: The acquisition module 601 is configured to acquire the playback address of a movie in response to a detection that the detail page is being presented.

In one example, the playback address of the movie can be acquired as soon as the detail page of the movie is presented. In this way, there is no need to start the clock or timer to reduce power consumption.

It can be understood that the detail page of the movie is the page for showing the relevant information of the movie, including the name, actors, director, year, relevant recommendations and other information, and providing interactive operations such as collection, filming, ordering, playing, bookmarks, broadcasting list, or the like, that a user must go through before watching the movie.

In an embodiment, the acquisition module 601 in this embodiment is further configured to acquire the playback data of each movie in the third predetermined time period starting from the current time as the main interface of the video is being presented; and display the playback data of each movie.

It should be understood that when a user is ready to watch a video, it is very likely that he/she will watch a movie that has not been watched in the recent period. Therefore, when he/she is currently viewing the main interface of the video, the playing data of each movie within a third predetermined time period starting from the current time is acquired, such that the user is allowed to directly select the movie to be watched from the playing data of each movie and enter the details page of the movie, thus avoiding the cumbersome operation of inputting the name of the movie again for searching, or looking for the movie among many movies in the main interface of the video. To a certain extent, the experience satisfaction of the user is improved.

An example is shown here with details for a better understanding.

For example, if the main interface of the video is currently being presented, and the current time is 19:00, and the third predetermined time period is 7 hours, the playing data of each movie from 12: 00 to 19: 00 will be acquired, and the acquired playing data of each movie is supposed to be A, B and C respectively. The playing data of movies A, B and C is displayed separately, and the user can click on any one playing data of movies A, B and C, such that the detail page of the corresponding movie is shown.

It shall be noted that the third predetermined time period may be customized by a developer or a user. Generally, the value of the third predetermined time period may be several hours, several days, or dozens of days. In practical application, the value of the third predetermined time period may be flexibly adjusted according to specific application scenarios.

In an embodiment, the acquisition module 601 in this embodiment is further configured to preprocess the playback address after acquiring the playback address of the movie and before acquiring the streaming media data of the movie according to the playback address; and the preprocessing includes string concatenation, or the like.

In an embodiment, the preloading module 602 in this embodiment is configured to perform a determination as to whether playback data of the movie is acquired; if yes, the latest playing data is looked for, from the playing data, the starting time of the movie for resume playing is determined, and starting from the starting time, the streaming media data of the first predetermined time period after the starting time is acquired; or if not, the streaming media data of the second predetermined time period from the beginning of the movie is acquired.

It should be understood that when the detail page of the movie is being presented, a determination as to whether the movie has been played or not, can be performed by determining whether the playing data of the movie can be acquired. If the playing data of the movie cannot be acquired, then the movie has not been played and is currently in the state of first time playing. And if the playing data of the movie can be acquired, then the movie has been played before and is currently in the state of resume playing. For TV series, there are usually dozens of episodes, and the "first playing" and "resume playing" as mentioned above are referred to the playing of each episode.

An example is shown here with details for a better understanding.

For example, it is apparent from the acquired playing data of the movie as shown in Table 1 that, the latest playing data from Table 1 is at 10th minute of Episode 11, played at 20: 00 on 2019: 08: 09, then the starting time of the movie for resume playing is determined to be at 11th minute of the Episode 11, and the streaming media data starting from the 11th minute of the Episode 11 is to be acquired. In case that the first predetermined time period is 2 minutes, then the streaming media data from the 11th minute to the 13th minute of the Episode 11 is to be acquired.

**Table 1**

| Playback time | Recently played |
|---|---|
| 2019:08:06 19:00 | Episode 5, 39 minutes |
| 2019:08:07 19:30 | Episode 7, 40 minutes (finished) |
| 2019:08:08 19:00 | Episode 9, 40 minutes (finished) |
| 2019:08:09 20:00 | Episode 11, 10 minutes |

It shall be noted that, resume playing is illustrated by way of an example merely here. However, in practical application, flexible adjustments shall be made according to specific application scenarios. Also, it shall be noted that the first predetermined time period may be customized by a developer or a user, and the value of the first predetermined time period is greater than 0 minutes but less than the remaining time period of the movie for resume playing. For example, the value of the first time period is greater than 0 minutes but less than 30 minutes. Generally, the value of the first predetermined time period is not too large, as long as that the movie can be played immediately after the user sends the play instruction.

A further example is shown here with details for a better understanding.

For example, it is apparent from the acquired playing data of the movie as shown in Table 2 that, the latest playing data from Table 2 is at the 40th minute of the Episode 11 played at 20: 00 on 2019: 08: 09 (finished). Then it is determined that currently the Episode 12 shall be played for the first time, in case that the second predetermined time period is 3 minutes, and then the streaming media data from 0 to 3rd minute of the Episode 12 is to be acquired.

**Table 2**

| Playback time | Recently played |
|---|---|
| 2019:08:06 19:00 | Episode 5, 39 minutes |
| 2019:08:07 19:30 | Episode 7, 40 minutes (finished) |
| 2019:08:08 19:00 | Episode 9, 40 minutes (finished) |
| 2019:08:09 20:00 | Episode 11, 40 minutes (finished) |

It shall be noted that, first playing is illustrated by way of an example merely here. However, in practical application, flexible adjustments shall be made according to specific application scenarios. Also, it shall be noted that the second predetermined time period may be customized by a developer or a user, and the value of the second predetermined time period is greater than 0 minutes but less than the entire duration of the movie. For example, the value of the second time period is greater than 0 minutes but less than 30 minutes. Generally, the value of the second predetermined time period is not too large, as long as that the movie can be played immediately after the user sends the play instruction. The value of the second predetermined time period may be or may not be the same as that of the first predetermined time period.

In an embodiment, the preload module 602 in this embodiment is used to parse the protocol data corresponding to streaming media data into standard encapsulation format data; Separating the encapsulated format data into audio stream compression coding data and video stream compression coding data; Decoding the audio stream compression coded data and the video stream compression coded data; Synchronized audio stream data and video stream data.

It shall be noted that what is described here is only the routine operations of preloading the streaming media data by the preloading module 602. On this basis, more or fewer operations may be performed by the preloading module 602 accordingly for preloading the streaming media data, as long as the performance of the preloading operations enables the immediate playing of the movie as the user sends the playing instruction.

In this embodiment, the playing module 603 is configured to play the movie according to the streaming media data when receiving the playing instruction.

In an embodiment, the preloading operation of streaming media data by the preloading module 602 in this embodiment may be corresponding to one thread, which is called the decoding thread. And the detection of the playing instruction by the playback module 603 in this embodiment may be corresponding to another thread, which is called the rendering thread. In this way, a dual-thread mode is enabled, which ensures that the audio and video can be transmitted as soon as possible for playing.

The apparatus according to this embodiment of the present disclosure includes an acquisition module, a preloading module and a playback module, the playback address of the movie is acquired by the acquisition module as the detail page of the movie is being presented. Then, the streaming media data of a predetermined time period in the movie is acquired according to the playback address, and the streaming media data is preloaded, by the preloading module. And then, the movie is played according to the streaming media data as the playing instruction is received, by the playback module. Thereby, the problems of the inefficiency of prompt playing of the video and poor user experience in the existing technology are solved. Therefore, as compared with the existing technology, with the apparatus according to the embodiment of the present disclosure, the streaming media data of corresponding the predetermined time period in a movie is preloaded as the detail page of the movie is being presented, such that, prompt playing of the movie is possible as soon as the user sends the playing instruction. Thus, slow loading and long waiting for the movie resulting from the preloading of the movie after sending of the playing instruction by the user, is avoided, and the user's experience satisfaction is greatly improved.

### EMBODIMENT FOUR

In order to solve the problems of slow loading and long waiting for the movie and poor user experience in the existing technology, a terminal device is provided in this embodiment of the present disclosure, as shown in FIG. 7, which depicts a schematic diagram of the terminal device according to this embodiment.

The terminal device according to this embodiment includes a processor 701, a memory 702 and a communication bus 703.

The communication bus 703 in this embodiment is configured to implement the connection and communication between the processor 701 and the memory 702. The processor 701 is configured to execute one or more programs stored in the memory 702 to carry out the following operations of,
acquiring a playback address of the movie when a detail page of the movie is being presented;
acquiring the streaming media data of a predetermined time period in the movie according to the playback address, and preloading the streaming media data; and
playing the movie according to the streaming media data as the play instruction is received.

It should be noted that, in order not to be redundant, not all the examples in Embodiments one to three are fully illustrated in this embodiment. It should be apparent that all the examples in Embodiments one to three are suitable for this embodiment.

And, there is also provided a computer-readable storage medium in an embodiment of the present disclosure, in which at least one program executable by at least one processor are stored, which when executed by the processor, causes the processor to carry out the video playing method as described in the above-mentioned Embodiments one and two.

The computer-readable storage medium includes volatile or nonvolatile, removable or non-removable media implemented in any method or technology for storing information such as computer-readable instructions, data structures, computer program modules or other data. Computer readable storage media include, but are not limited to, RAM(Random Access Memory), ROM(Read-Only Memory), EEPROM (Electrically Erasable Programmable Read Only Memory), Erasable programmable read-only memory), flash memory or other memory technologies, CD-ROM (compact disc read-only memory), digital versatile disc (DVD) or other optical disc storage, magnetic box, magnetic tape, magnetic disc storage or other magnetic storage devices, or any other medium that can be used to store desired information and can be accessed by a computer.

Apparently, it should be understood by a person having ordinary skills in the art that all or some steps, functional modules/units in the methods disclosed above, systems and devices can be implemented as software (which can be implemented by program codes executable by computing devices), firmware, hardware and their appropriate combinations. In the hardware implementation, the division between functional modules/units mentioned in the above description does not necessarily correspond to the division of physical components. For example, a physical component can have multiple functions, or a function or step can be performed by several physical components in cooperation. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media), and in some cases, the steps shown or described can be performed in a different order than here. As is well known to a person having ordinary skills in the art, the term computer storage media includes volatile and nonvolatile, removable and non-removable media implemented in any method or technology for storing information such as computer readable instructions, data structures, program modules or other data.

Furthermore, it is well known to ta person having ordinary skills in the art that communication media usually contains computer-readable instructions, data structures, program modules or other data in modulated data signals such as carrier waves or other transmission mechanisms, and can include any information delivery media. Therefore, the present disclosure is not limited to any specific combination of hardware and software.

The above content is a further detailed description of the examples of the present disclosure in conjunction with the specific implementation, and it cannot be considered that the specific implementation of the present disclosure is only limited to these descriptions. For a person having ordinary skills in the art to which the present disclosure belongs, various simple deductions or alternations can be made without departing from the concept of the present disclosure, all of which should be regarded as falling within the protection scope of the present disclosure.

## Claims

1. A video playing method, comprising,
acquiring a playback address of a movie in response to a current presenting of a detail page of the movie;
acquiring streaming media data of a predetermined time period in the movie according to the playback address, and preloading the streaming media data; and
playing the movie according to the streaming media data in response to a playback instruction being received.

2. The video playing method according to claim 1, wherein preloading the streaming media data comprises,
parsing protocol data corresponding to the streaming media data into standard packaged format data;
dividing the standard packaged format data into audio stream compression coded data and video stream compression coded data;
decoding the audio stream compression coded data and the video stream compression coded data, to generate decoded audio stream data and video stream data; and
synchronizing the decoded audio stream data and video stream data.

3. The video playing method according to claim 1, wherein acquiring the streaming media data of the predetermined time period in the movie according to the playback address comprises,
performing a determination as to whether playback data of the movie is acquired;
in response to a presence of the playback data of the movie, looking for latest playback data from the playback data, determining a starting time of the movie for a resume playing, and starting from the starting time, acquiring streaming media data of a first predetermined time period after the starting time; and
in response to an absence of the playback data of the movie, starting from a beginning of the movie, and acquiring streaming media data of a second predetermined time period in the movie.

4. The video playing method according to claim 1, wherein acquiring the playback address of the movie in response to the current presenting of the detail page of the movie comprises,
starting a timer in response to a current presenting of the detail page of the movie, and acquiring the playback address of the movie in response to a predetermined time being reached; or
acquiring the playback address of the movie in response to a current presenting of the detail page of the movie.

5. The video playing method according to any one of claims 1 to 4, wherein after acquiring the playback address of the movie and before acquiring the streaming media data of the movie according to the playback address, the method further comprises, preprocessing the playback address.

6. The video playing method according to any one of claims 1 to 4, wherein before acquiring the playback address of the movie in response to the current presenting of the detail page of the movie, the method further comprises,
acquiring playback data of each movie in a third predetermined time period starting from a current time, in response to a current presenting of a main interface of video; and
displaying the playback data of each movie.

7. An apparatus, comprising an acquisition module, a preloading module and a playback module, wherein,
the acquisition module is configured to acquire a playback address of a movie in response to a current presenting of a detail page of the movie;
the preloading module is configured to acquire streaming media data of a predetermined time period in the movie according to the playback address, and to preload the streaming media data; and
the playback module is configured to play the movie according to the streaming media data in response to a playback instruction being received.

8. The apparatus according to claim 7, wherein the apparatus is an interactive network TV, IPTV or an Internet TV, OTT TV.

9. A terminal device, comprising a processor, a memory and a communication bus; wherein,
the communication bus is configured to implement a connection and communication between the processor and the memory; and
the processor is configured to execute at least one computer program stored in the memory, which when executed by the processor, causes the processor to carry out the video playing method according to any one of claims 1 to 6.

10. A computer-readable storage medium storing thereon at least one program executable by at least one processor, which when executed by the processor, causes the processor to carry out the video playing method according to any one of claims 1 to 6.
